# EUROPÄISCHE PATENTANMELDUNG

(11) **EP 1 526 418 A2**
(43) Veröffentlichungstag der Anmeldung: **27.04.2005**
(21) Anmeldenummer: 04023726.5
(22) Anmeldetag: 05.10.2004
(51) Int. Cl.: G05B 19/042

(54) **System, bestehend aus einem Haushaltsgerät und einem externen Gerät**

(30) Priorität: 24.10.2003 DE 10349978
(71) Anmelder: Miele & Cie. KG, 33332 Gütersloh (DE)
(72) Erfinder: Böger, Jörg, 33378 Rheda-Wiedenbrück (DE); Erdmann, Torsten, 59269 Beckum (DE); Krauthausen, Herbert, 97297 Waldbüttelbrunn (DE); Köster, Thomas, 33729 Bielefeld (DE); Niehaus, Detlef, 59067 Hamm (DE)

(57) **Zusammenfassung**

Die Erfindung betrifft ein System, bestehend aus einem Haushaltsgerät und einem externen Gerät, insbesondere zur Parametrierung, Fehlerdiagnose und Fernwartung des Haushaltsgeräts, wobei das eine Gerät ein Sendeteil und das andere Gerät ein Empfangsteil aufweist, die zum Austausch von elektromagnetischer Strahlung in dem Wellenlängenbereich von sichtbaren Licht oder Infrarot ausgebildet sind und durch eine Betätigung jeweils eines Betätigungsmittels an dem jeweiligen Gerät aktivierbar sind.

Um ein aus einem Haushaltsgerät (4) und einem externen Gerät bestehendes System anzugeben, bei dem auf eine durch das menschliche Auge erkennbare Kennzeichnung einer Schnittstelle zum Datenaustausch zwischen dem Haushaltsgerät (4) und dem externen Gerät an dem Haushaltsgerät (4) verzichtet werden kann, ohne dabei den Bedienkomfort für den Benutzer zu verschlechtern schlägt die Erfindung vor, dass durch die Aktivierung des Sendeteils (6) von diesem fortlaufend ein vorher festgelegter und in einem Speicher des Sendeteils (6) abgespeicherter, aus einer Mehrzahl von voneinander verschiedenen Codewörtern bestehender, Suchcode aussendbar ist und in einer Verarbeitungseinheit des Empfangsteils von dem Empfangsteil empfangene Signale mit dem in einem weiteren Speicher des Empfangsteils abgespeicherten Suchcode vergleichbar sind und bei Übereinstimmung der empfangenen Signale mit dem Suchcode mittels des Empfangsteils ein vorher festgelegtes Antwortsignal ausgebbar ist.

## Beschreibung

Die Erfindung betrifft ein System der im Oberbegriff des Anspruchs 1 genannten Art.

Ein derartiges System ist beispielsweise aus der DE 694 18 377 T2 bekannt. Das bekannte System besteht aus einem Haushaltsgerät und einem externen Gerät, insbesondere zur Parametrierung, Fehlerdiagnose und Fernwartung des Haushaltsgeräts. Das eine Gerät weist ein Sendeteil und das andere Gerät ein Empfangsteil auf, die zum Austausch von elektromagnetischer Strahlung in dem Wellenlängenbereich von sichtbaren Licht oder Infrarot ausgebildet sind und durch eine Betätigung jeweils eines Betätigungsmittels an dem jeweiligen Gerät aktivierbar sind. Durch die Aktivierung des Sendeteils ist von diesem fortlaufend ein vorher festgelegter und in einem Speicher des Sendeteils abgespeicherter, aus einer Mehrzahl von voneinander verschiedenen Codewörtern bestehender, Suchcode aussendbar. In einer Verarbeitungseinheit des Empfangsteils sind von dem Empfangsteil empfangene Signale mit dem in einem weiteren Speicher des Empfangsteils abgespeicherten Suchcode vergleichbar. Bei Übereinstimmung der empfangenen Signale mit dem Suchcode ist mittels des Empfangsteils ein vorher festgelegtes Antwortsignal ausgebbar. Der Suchcode besteht aus einer Abfolge von mindestens drei voneinander verschiedenen Codewörtern und die einzelnen Abfolgen sind voneinander durch ein Pausenintervall getrennt.

Ferner ist aus der DE 196 15 358 A1 eine Anzeigesteuerung für eine Anzeigevorrichtung eines Haushaltsgeräts bekannt, bei der die Daten mehrerer gleichzeitig betriebener Haushaltsgeräte seriell oder parallel auf der Anzeigevorrichtung darstellbar sind. Hierzu ist in einer Ausführungsform eine drahtlose Datenübertragung vorgesehen.

Der Erfindung stellt sich somit das Problem ein aus einem Haushaltsgerät und einem externen Gerät bestehendes System anzugeben, bei dem auf eine durch das menschliche Auge erkennbare Kennzeichnung einer Schnittstelle zum Signal- oder Datenaustausch zwischen dem Haushaltsgerät und dem externen Gerät an dem Haushaltsgerät verzichtet werden kann, ohne dabei den Bedienkomfort für den Benutzer zu verschlechtern und dabei die Sicherheit vor ungewünschten Antwortsignalen bei gleichzeitig schneller Reaktion des Empfangsteils zu verbessern.

Erfindungsgemäß wird dieses Problem durch ein System mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben der Möglichkeit, auf eine durch das menschliche Auge erkennbare Kennzeichnung einer Schnittstelle zum Signal- oder Datenaustausch zwischen dem Haushaltsgerät und dem externen Gerät an dem Haushaltsgerät verzichten zu können, ohne dabei den Bedienkomfort für den Benutzer zu verschlechtern, insbesondere darin, dass beispielsweise eine Bedruckung der Bedienblende oder dergleichen zur Kennzeichnung der Schnittstelle an dem Haushaltsgerät entfallen kann. Hierdurch ist die Bedienblende einfacher und kostengünstiger herstellbar. Darüber hinaus wird der optische Gesamteindruck der Bedienblende verbessert bzw. ist es möglich, die Bedienblende ohne Rücksicht auf eine erforderliche Kennzeichnung des Bereichs der Schnittstelle an dem Haushaltsgerät zu gestalten.

Der Suchcode besteht aus einer Abfolge von mindestens drei voneinander verschiedenen Codewörtern und die einzelnen Abfolgen sind voneinander durch ein Pausenintervall getrennt. Auf diese Weise ist die Ausgabe eines Antwortsignals aufgrund etwaiger elektromagnetischer Störstrahlungen, beispielsweise von anderen elektrischen Geräten, sicher verhindert und gleichzeitig eine schnelle Reaktion des Empfangsteils auf die empfangenen Signale gewährleistet. Durch das Pausenintervall, in dem die fortlaufende Aussendung des Suchcodes kurzzeitig unterbrochen ist, kann das auch als Empfänger für elektromagnetische Strahlung, wie beispielsweise das Antwortsignal, ausgebildete Sendeteil selbst Signale empfangen und verarbeiten.

Da der Vergleich der empfangenen Signale mit dem abgespeicherten Suchcode in dem Empfangsteil erst nach dem Empfang von mindestens fünf hintereinander empfangenen Codewörtern beginnt, ist die Sicherheit vor ungewünschten Antwortsignalen bei gleichzeitig schneller Reaktion des Empfangsteils verbessert.

Grundsätzlich ist das Antwortsignal nach Art und Dauer in weiten geeigneten Grenzen wählbar. Zweckmäßigerweise ist das Antwortsignal als ein aus einem einzigen Codewort bestehender Antwortcode ausgebildet, der von dem Empfangsteil an das Sendeteil übermittelbar ist.

Eine andere vorteilhafte Weiterbildung der erfindungsgemäßen Lehre sieht vor, dass das Antwortsignal auf einer Anzeige und/oder über einen Lautsprecher wenigstens von einem der beiden Geräte ein von den menschlichen Sinnesorganen wahrnehmbares akustisches und/oder optisches Erkennungssignal auslöst. Hierdurch ist eine unmittelbare und leicht erkennbare Information des Benutzers über den Fortschritt des Suchvorgangs ermöglicht.

Ein Ausführungsbeispiel der Erfindung ist in den Zeichnungen rein schematisch dargestellt und wird nachfolgend näher beschrieben. Es zeigt
- Figur 1: ein erfindungsgemäßes System in teilweiser perspektivischer Darstellung und
- Figur 2: eine Detailansicht des Systems aus Fig. 1 in teilweiser Schnittdarstellung.

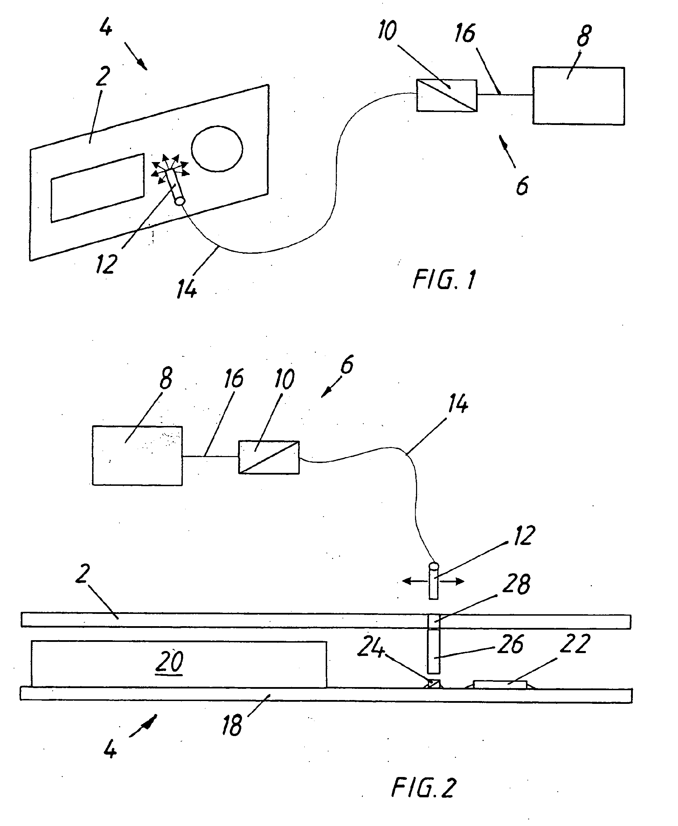

In Fig. 1 ist ein erfindungsgemäßes System teilweise und stark vereinfacht dargestellt. Das System, besteht aus einem in Fig. 1 lediglich mit der Bedienblende 2 angedeuteten Haushaltsgerät 4 und einem in Fig. 1 nicht dargestellten externen Gerät, insbesondere zur Paramtetrierung, Fehlerdiagnose und Fernwartung des Haushaltsgeräts 4, wobei hier das externe Gerät als ein transportabler Kundendienstcomputer ausgebildet ist. Der transportable Kundendienstcomputer weist darüber hinaus einen nicht dargestellten Lautsprecher auf, über den ein von dem menschlichen Gehör wahrnehmbares akustisches Erkennungssignal abgebbar ist. Bei diesem Ausführungsbeispiel weist das externe Gerät ein Sendeteil 6 und das Haushaltsgerät 4 ein in Fig. 1 nicht dargestelltes Empfangsteil auf, die zum Austausch von elektromagnetischer Strahlung in dem Wellenlängenbereich von Infrarot ausgebildet sind und durch eine Betätigung jeweils eines nicht dargestellten Betätigungsmittels an dem jeweiligen Gerät, Haushaltsgerät 4 und externes Gerät, aktivierbar sind. Bei dem vorliegenden Ausführungsbeispiel sind sowohl das Sendeteil 6 wie auch das Empfangsteil jeweils als Sender und gleichzeitig als Empfänger von elektromagnetischer Strahlung, hier Infrarotstrahlung, ausgebildet. Hierdurch ist es möglich bidirektional Signale auszutauschen.

Das Sendeteil 6 weist ein aus einem Speicher und einer Verarbeitungseinheit bestehende Baueinheit 8 auf, wobei in dem Speicher 8 ein vorher festgelegter und aus mindestens drei von voneinander verschiedenen Codewörtern bestehender Suchcode abgespeichert ist. Bei dem vorliegenden Ausführungsbeispiel besteht der Suchcode aus drei voneinander verschiedenen Codewörtern, in Hexadezimaldarstellung beispielsweise F0, CC und AA. Darüber hinaus weist das Sendeteil 6 einen Opto-Elektrowandler 10 auf, an dem ein Sendekopf 12 mittels eines Lichtleiters 14 anschließbar ist. Bei dem vorliegenden Ausführungsbeispiel ist der Opto-Elektrowandler 10 mittels eines Kabels 16 mit dem Speicher 8 in Signalübertragungsverbindung. Ferner weist der Opto-Elektrowandler 10 eine nicht dargestellte LED auf, mittels der ein von dem menschlichen Auge wahrnehmbares Erkennungssignal abgebbar ist. Alternativ zu dem hier vorliegenden Ausführungsbeispiel ist es auch denkbar, dass die genannten Bestandteile des Sendeteils 6, nämlich der Opto-Elektrowandler 10 und der Sendekopf 12 sowie der Lichtleiter 14 und das Kabel 16 in einer gemeinsamen Baueinheit zusammengefasst sind. Der Vorteil des vorliegenden Ausführungsbeispiels besteht in einem verbesserten Bedienkomfort für den Benutzer, da dieser, wie nachfolgend näher erläutert, lediglich den Sendekopf 12 halten und bewegen muss.

Der Aufbau des Empfangsteils wird anhand von Fig. 2 näher erläutert. Wie aus Fig. 2 hervorgeht, ist hinter der Bedienblende 2 in Richtung des Inneren des Haushaltsgeräts 4 eine Platine 18 angeordnet. Auf der Platine 18 ist neben anderen bei Haushaltsgeräten üblichen Bauteilen, wie beispielsweise einer Anzeigeeinheit 20 das Empfangsteil angeordnet. Das Empfangsteil weist eine Verarbeitungseinheit und einen weiteren Speicher, die zu einer Baueinheit 22 zusammengefasst sind, einen weiteren Opto-Elektrowandler 24 und einen weiteren Lichtleiter 26 auf. In dem weiteren Speicher ist der oben näher erläuterte Suchcode und ein vorher festgelegtes Antwortsignal abgespeichert, wobei das Antwortsignal des vorliegenden Ausführungsbeispiels als ein aus einem einzigen Codewort, in Hexadezimaldarstellung beispielsweise 00, bestehender Antwortcode ausgebildet ist. Der weitere Lichtleiter 26 ist bei diesem Ausführungsbeispiel erforderlich, um den Abstand zwischen der Bedienblende 2 und dem weiteren Opto-Elektrowandler 24 zu überbrücken. Alternativ hierzu sind andere Ausführungsbeispiele denkbar, bei denen ein derartiger weiterer Lichtleiter 26 nicht erforderlich ist. Damit ein Signalaustausch zwischen dem Sendekopf 12 und dem Empfangsteil möglich ist, muss der Bereich der Bedienblende, der mit dem weiteren Lichtleiter 26 in Kontakt steht, nämlich Bereich 28, für Infrarotstrahlung, also für den Wellenlängenbereich der ausgetauschten Signale durchlässig ausgebildet sein.

Nachfolgend wird die Funktionsweise des obigen Ausführungsbeispiels des erfindungsgemäßen Systems anhand der Fig. 1 und 2 näher erläutert:

Das Haushaltsgerät 4 ist eingeschaltet, so dass das Empfangsteil aktiviert ist. Der Kundendienstmitarbeiter schaltet den transportablen Kundendienstcomputer ein und startet eine Suchfunktion, die das Sendeteil 6 aktiviert. Mit dem Start der Suchfunktion sendet das Sendeteil 6 auf dem Fachmann bekannte Weise den in dem Speicher der Baueinheit 8 abgespeicherten Suchcode fortlaufend mittels des Sendekopfes 12 in die freie Umgebung. Sobald der Kundendienstmitarbeiter den Sendekopf in die Nähe des Bereichs 28 bzw. in die Nähe des hinter der Bedienblende 2 angeordneten Empfangteils bewegt, bei dem vorliegenden Ausführungsbeispiel etwa 2 bis 4 cm, und dass die Senkrechte zu der den als Infrarotstrahlung ausgebildeten Suchcode abgebenden Fläche des Sendekopfes 12 etwa in Richtung des Bereichs 28 ausgerichtet ist, wird der von dem Sendekopf 12 abgestrahlte Suchcode von dem Empfangsteil empfangen, über den weiteren Lichtleiter 26 und den weiteren Opto-Elektrowandler 24 auf dem Fachmann bekannte Weise an die in der Baueinheit 22 angeordnete Verarbeitungseinheit des Empfangsteils weitergeleitet.

Nach dem das Empfangsteil fünf Codewörter hintereinander empfangen hat, werden die empfangenen Signale in einer Auswerteschaltung der Verarbeitungseinheit des Empfangsteils mit dem in dem weiteren Speicher abgespeicherten Suchcode auf dem Fachmann bekannte Weise verglichen. Stimmen die empfangenen Signale mit dem abgespeicherten Suchcode überein, was in dem vorliegenden Beispiel der Fall ist, wird das in dem weiteren Speicher abgespeicherte Antwortsignal in analoger Weise zu dem vorgenannten Suchcode von dem Empfangsteil an das Sendeteil übermittelt. Bei dem vorliegenden Ausführungsbeispiel ist hierfür jeweils zwischen den einzelnen Abfolgen des fortlaufend gesendeten Suchcodes ein Pausenintervall vorgesehen, während dessen die fortlaufende Aussendung des Suchcodes kurzfristig unterbrochen ist. Das aus einem einzigen Codewort, in Hexadezimaldarstellung beispielsweise 00, bestehende Antwortsignal wird analog zu dem Empfangsteil und auf dem Fachmann bekannte Weise in dem Sendeteil 6 mit einem vorher festgelegten und in dem Speicher der Baueinheit 8 abgespeicherten oben erläuterten Antwortsignal verglichen. Stimmen die von dem Sendeteil 6 empfangen Signale mit dem abgespeicherten Antwortsignal überein, so wird mittels des Sendeteils 6 auf dem Fachmann bekannte Weise zum einen die an dem Opto-Elektrowandler 10 angeordnete LED eingeschaltet und zum anderen über den Lautsprecher des transportablen Kundendienstcomputers ein vorher festgelegter Signalton ausgegeben. Alternativ hierzu sieht eine schaltungstechnisch einfachere Lösung vor, dass die LED des Opto-Elektrowandlers 10 unmittelbar durch die den Opto-Elektrowandler 10 von dem Empfangsteil in Richtung Sendeteil 6 passierenden elektrischen Signale, also aufgrund des elektrischen Stromflusses, eingeschaltet wird. Der Kundendienstmitarbeiter wird demnach sowohl durch die leuchtende LED wie auch durch den Signalton darüber informiert, dass sich der Sendekopf 12 in dem Bereich 28 der Bedienblende 2 befindet, so dass ein weiterer Signal- bzw. Datenaustausch zwischen dem Haushaltsgerät 4 und dem transportablen Kundendienstcomputer auf dem Fachmann bekannte Weise erfolgen kann. Alternativ zu der vorgenannten Ausgabe eines akustischen und/oder optischen Erkennungssignals an dem externen Gerät ist es beispielsweise auch denkbar, die an dem Haushaltsgerät vorhandenen Anzeigeeinheit 20 zur Ausgabe eines optischen Erkennungssignals zu verwenden.

Würde der Kundendienstmitarbeiter den Sendekopf 12 wieder aus den Bereich 28 der Bedienblende 2 herausbewegen, so würde der von dem Sendekopf 12 ausgesendete Suchcode durch das Empfangsteil aufgrund des zunehmenden Abstands zwischen dem Sendekopf 12 und dem Empfangsteil und/oder dem Umstand, dass der Sendekopf 12 mit der Senkrechten zu der den Suchcode abstrahlenden Fläche nicht mehr in Richtung des Bereichs 28 bzw. des Empfangsteils weist, nicht mehr oder zumindest kein für die Auswertung durch das Empfangsteil ausreichend starkes Signal empfangen.

## Patentansprüche

1. System, bestehend aus einem Haushaltsgerät und einem externen Gerät, insbesondere zur Parametrierung, Fehlerdiagnose und Fernwartung des Haushaltsgeräts, wobei das eine Gerät ein Sendeteil und das andere Gerät ein Empfangsteil aufweist, die zum Austausch von elektromagne-tischer Strahlung in dem Wellenlängenbereich von sichtbaren Licht oder Infrarot ausgebildet sind und durch eine Betätigung jeweils eines Betätigungsmittels an dem jeweiligen Gerät aktivierbar sind, wobei durch die Aktivierung des Sendeteils von diesem fortlaufend ein vorher festgelegter und in einem Speicher des Sendeteils abgespeicherter, aus einer Mehrzahl von voneinander verschiedenen Codewörtern bestehender, Suchcode aussendbar ist und in einer Verarbeitungseinheit des Empfangsteils von dem Empfangsteil empfangene Signale mit dem in einem weiteren Speicher des Empfangsteils abgespeicherten Suchcode vergleichbar sind und bei Übereinstimmung der empfangenen Signale mit dem Suchcode mittels des Empfangsteils ein vorher festgelegtes Antwortsignal ausgebbar ist, und dass der Suchcode aus einer Abfolge von mindestens drei voneinander verschiedenen Codewörtern besteht und dass die einzelnen Abfolgen voneinander durch ein Pausenintervall getrennt sind,
**dadurch gekennzeichnet,**
**dass** der Vergleich der empfangenen Signale mit dem abgespeicherten Suchcode in dem Empfangsteil erst nach dem Empfang von mindestens fünf hintereinander empfangenen Codewörtern beginnt.

2. System nach Anspruch 1,
**dadurch gekennzeichnet,**
**dass** das Antwortsignal als ein aus einem einzigen Codewort bestehender Antwortcode ausgebildet ist, der von dem Empfangsteil an das Sendeteil (6) übermittelbar ist.

3. System nach einem der Ansprüche 1 oder 2,
**dadurch gekennzeichnet,**
**dass** das Antwortsignal auf einer Anzeige und/oder über einen Lautsprecher wenigstens von einem der beiden Geräte ein von den menschlichen Sinnesorganen wahrnehmbares akustisches und/oder optisches Erkennungssignal auslöst.
